# EUROPÄISCHE PATENTANMELDUNG

(11) **EP 1 314 960 A1**
(43) Veröffentlichungstag der Anmeldung: **28.05.2003**
(21) Anmeldenummer: 02022820.1
(22) Anmeldetag: 12.10.2002
(51) Int. Cl.: G01C 1/04

(54) **Elektronische Anzeige- und Steuervorrichtung für ein Messgerät**

(30) Priorität: 22.11.2001 EP 01127378
(71) Anmelder: Leica Geosystems AG, 9435 Heerbrugg (CH)
(72) Erfinder: Kern, Gerhard, 6840 Götzis (AT); Schneider, Klaus, 6850 Dornbirn (AT); Vorburger, Pius, 9442 Berneck (CH); Hinderling, Jürg, 9437 Marbach (CH)
(74) Vertreter: Kaminski, Susanne, Dr.

(57) **Zusammenfassung**

Eine elektronische Anzeige- und Steuervorrichtung für ein geodätisches Messgerät (12) beinhaltet Aufnahmemittel (1') und Darstellungsmittel zur Erfassung und Wiedergabe eines Messbereichs (11) zusammen mit Eingabemitteln zur Steuerung von Messvorgängen. Das für diese Messvorgänge benötigte Strahlungsbündel (S) wird von einer Strahlungsquelle emittiert und über Ausrichtmittel in seiner Emissionsrichtung so beeinflusst, dass es innerhalb des Messbereichs (11) auf ausgewählte Zielpunkte ausgerichtet werden kann ohne dass eine Bewegung der Aufnahmemittel erfolgen muss. Dabei erfolgen die Festlegung der Zielpunkt und die Auslösung des Messvorgangs durch die Bewegung einer Positionsmarke (3a) auf einem Bildschirm.

Durch eine geeignete Zusammenfassung der Darstellungsmittel mit den Mitteln zur Eingabe von Daten kann ein eigenes Handhabungsmodul geschaffen werden, das auch unabhängig und abgesetzt von einem Messgerät (12,12') verwendet werden kann und mit diesem über Kommunikationsmittel in Verbindung steht.

Die Verwendung eines solchen Moduls zusammen mit mehreren Messgeräten als Sensorkomponenten erlaubt die Gestaltung fernbedienbarer geodätischer Vermessungssysteme.

## Beschreibung

Die Erfindung betrifft eine elektronische Anzeige- und Steuervorrichtung nach dem Oberbegriff des Anspruchs 1 sowie ein geodätisches Messgerät nach Anspruch 15, eine Modulkomponente nach Anspruch 23 und ein geodätisches Vermessungssystem nach Anspruch 24.

Für die Aufnahme von Eigenschaften definierter Punkte in einer Messumgebung, insbesondere von Daten mit räumlichem Bezug, sind seit der Antike eine Vielzahl von Messvorrichtungen bekannt. Als räumliche Standarddaten werden dabei der Ort eines Messgerätes nebst evtl. vorhandener Referenzpunkte, sowie Richtung, Entfernung und Winkel zu Messpunkten aufgenommen. Bisherige Verbesserungen betrafen meist den Einsatz neuer technischer Verfahren mit erhöhter Genauigkeit und Schnelligkeit.

Ein allgemein bekanntes Beispiel für solche Messvorrichtungen stellt der Theodolit dar. Eine Übersicht über geodätische Messvorrichtungen des Stands der Technik bieten "Elektronische Entfernungs- und Richtungsmessung" von R. Joeckel und M. Stober, 4. Auflage, Verlag Konrad Wittwer, Stuttgart 1999 und "Electronic Distance Measurement" von J.M. Rüeger, 4. Auflage, Springer-Verlag, Berlin, Heidelberg 1996. Allerdings erfordern derartige Vorrichtungen immer noch einen unmittelbar am Gerät arbeitenden Benutzer, der das Messgerät meist mit Hilfe von speziellen Richtmitteln, wie z.B. optischen Teleskopen, auf die anzumessenden Punkte einrichtet.

Aufgrund des meist für das menschliche Auge und den Messvorgang gemeinsam zu nutzenden Strahlengangs erfordern solche Geräte dessen technische Auslegung in der Bauweise eines Teleskops, wodurch Beschränkungen der Ausführungsform resultieren.

Durch die Kombination eines geodätischen Gerätes mit einem gegenüber diesem Gerät beweglichen oder unabhängig verbringbaren Bildschirm können Vorteile in ergonomischer und sicherheitstechnischer Hinsicht erreicht werden. Dabei wird das konventionelle Okular des Fernrohrs durch elektronische Aufnahmemittel ersetzt, so dass die bisher notwendige Bindung des Bedieners an das Gerät, wie auch die aufgrund der Nutzung des menschlichen Auges resultierenden Anforderungen oder Beschränkungen aufgehoben werden können. Die Steuerung des Gerätes und der damit durchzuführenden Messungen erfolgt elektronisch über die Anzeige des Bildschirms und eine geeignete Eingabevorrichtung für Daten und Steuerbefehle. Die Messungen können dann nach erfolgter Ausrichtung mit verschiedenen Verfahren, wie z.B. durch Messung der Winkelablage mit ergänzender Entfernungsmessung durch Triangulation oder mittels Laser, durchgeführt werden.

Aus den Patentschriften JP 02130409 A und JP 03167412 A ist die Kombination eines Theodoliten mit einer Video-Kamera bekannt, mit der schnelle und genaue dreidimensionale Messungen ermöglicht werden sollen. Hierbei werden durch zwei Theodolit-Video-Kamera-Kombinationen zeitgleich Aufnahmen von Bildern durch die jeweilige Kamera und Winkelmessungen mittels Theodoliten vorgenommen. Dabei sind jeweils die Achsen von Video-Kamera und Theodolit parallel, so dass die Winkelmessung eines Theodoliten mit den durch die Kamera dieser Kombination aufgenommenen Bildern verknüpft ist. Aus mindestens zwei unter verschiedenen Winkeln aufgenommenen Bildern können die dreidimensionalen Positionen der abgebildeten Objekte abgeleitet werden.

Aus der Europäischen Patentanmeldung EP 0 481 278 und dem zugehörigen Deutschen Gebrauchsmuster DE 90 07 731 U ist eine Messeinrichtung zur Positionsbestimmung optoelektronisch darstellbarer Raumpunkte bekannt. Die Messeinrichtung verfügt über einen bewegbaren Messkopf mit einer Kamera als Zielerfassungsgerät und einem Entfernungsmessgerät, deren Zielachsen präzise aufeinander ausgerichtet sind. Ein Zielpunkt wird vermessen, indem dieser mit der Kamera erfasst und nachfolgend die Kameraachse auf den Zielpunkt ausgerichtet Wird. Damit ist auch eine präzise Ausrichtung des Entfernungsmessgeräts verbunden, so dass dessen Achse ebenfalls auf den zu vermessenden Punkt weist.

In Europäische Patentanmeldung mit der Anmelde-Nr. 01127378 derselben Anmelderin wird ein Messgerät beschrieben, bei dem durch eine Trennung von Aufnahme- und Darstellungsmitteln eine Bedienung in ergonomisch vorteilhafter Weise wird. Durch eine geeignete Zusammenfassung der Darstellungsmittel mit den Mitteln zur Eingabe von Daten kann ein eigenes Handhabungsmodul geschaffen werden, das auch unabhängig und abgesetzt vom Messgerät verwendet werden kann und mit diesem über Kommunikationsmittel in Verbindung steht. Die Verwendung eines solchen Moduls zusammen mit mehreren Messgeräten als Sensorkomponenten erlaubt die Gestaltung fernbedienbarer geodätischer Vermessungssysteme. Innerhalb eines dargestellten Messbereichs ist eine Positionsmarke verschiebbar, über die Parameter eines Messvorgangs festgelegt und der Messvorgang ausgelöst werden kann. Der nachfolgende Messvorgang richtet die zur Messung benötigten Komponenten des Messgerät auf die durch die Positionsmarke bestimmte Position aus und die Messung wird durchgeführt.

Aus der Internationalen PCT-Anmeldung WO 99/60335 ist eine geodätische Vorrichtung bekannt, die einen Zielbereich mit einer Kamera erfasst und auf einem Bildschirm darstellt. Innerhalb dieses Bereichs können Ziele ausgewählt und deren Entfernung durch einen Entfernungsmesser gemessen werden, indem der Entfernungsmesser als vollständiges Gerät mit seiner Achse auf das gewählte Ziel ausgerichtet wird. Dabei werden Kamera und Entfernungsmesser entweder gemeinsam oder unabhängig voneinander durch Motoren bewegt.

Alle dargestellten Vorrichtungen des Stands der Technik erfordern für jede Messung zu einem Punkt das Bewegen der gesamten Vorrichtung bzw. eines Messkopfs, der sowohl Aufnahme- als auch Messmittel oder zumindest vollständige Messvorrichtungen beinhaltet. Damit müssen für jeden Messvorgang Komponenten des Messgerätes bewegt werden, die vergleichsweise gross und schwer sind und meist elektrische Stellmotoren benötigen, so dass ein erhöhter Bedarf an Zeit und Energie entsteht. Gerade für feldtaugliche Systeme ist jedoch der Energieverbrauch eine die Einsatzzeit und Zuverlässigkeit beeinflussende Grösse, so dass deren Reduzierung unmittelbare Vorteile mit sich bringt. Darüber hinaus führt das häufige Bewegen von grösseren und vergleichsweise schweren Teilen zu einem erhöhten Verschleiss bzw. erfordert eine verschleissmindernde oder verschleissresistente technische Auslegung der Komponenten.

Einen weiteren Nachteil stellt die Notwendigkeit dar, dass jedes Gerät jeweils über eigene Richtmittel verfügen muss, um die Achse des Messgerätes auf ein Ziel auszurichten. Selbst wenn für eine spezielle Vermessungsaufgabe stets alle Ziele innerhalb der Erfassungsbereichs der Aufnahmemittel liegen, so muss für jeden Messvorgang eine Bewegung der Vorrichtung oder zumindest der beiden Komponenten Aufnahmemittel und Messvorrichtung erfolgen.

Ein ähnlicher Nachteil entsteht bei der automatischen Zielverfolgung. Wird hierbei ein Ziel durch emittierte Strahlung aktiv beleuchtet und anhand der reflektierten Strahlung identifiziert bzw. verfolgt, so müssen bei Vorrichtungen des Standes der Technik entweder ständig die Aufnahmemittel bewegt werden oder aber es muss eine Koordination der Bewegungen von Aufnahme- und Beleuchtungsmitteln erfolgen, welche die bereits dargestellten Nachteile beinhaltet.

Die Aufgabe der vorliegenden Erfindung besteht in Bereitstellung einer Vorrichtung, als elektronische Anzeige- und Steuervorrichtung für ein Messgerät bzw. als Messgerät, welche die für Messungen notwendigen Bewegungen bzw. den dafür erforderlichen Zeit- und Energiebedarf reduziert.

Eine weitere Aufgabe besteht in der Reduzierung der Komplexität des Aufbaus einer opto-elektronischen Anzeigeund Steuervorrichtung bzw. eines gattungsgemässen Messgeräts.

Eine weitere Aufgabe besteht in der Verkleinerung einer elektronischen Anzeige- und Steuervorrichtung bzw. eines gattungsgemässen Messgeräts.

Eine weitere Aufgabe besteht in der Bereitstellung einer Möglichkeit der Zielverfolgung mit aktiver Beleuchtung innerhalb des Erfassungsbereichs eines Messgerätes ohne Veränderung des Sichtfeldes.

Diese Aufgaben werden erfindungsgemäss durch die kennzeichnenden Merkmale der Ansprüche 1 und 15 sowie durch die kennzeichnenden Merkmale der Unteransprüche gelöst bzw. die Lösungen fortgebildet.

Der Erfindung liegt die Idee zugrunde, eine Bewegung des zur Messung benötigten Strahlenbündels innerhalb des Erfassungsbereichs einer Optik zu bewirken, ohne hierfür eine sonst notwendige Bewegung der gesamten Optik oder grösserer Komponenten zu erfordern. Ermöglicht wird dies durch die Verwendung von optischen Komponenten der elektronischen Aufnahmemittel zur Emission des Strahlungsbündels. Mit der über die Optik der Aufnahmemittel emittierten Strahlung können grundsätzlich alle erfassten und in der Darstellung angezeigten Ziele vermessen werden, ohne dass die optische Achse der Aufnahmemittel oder eine weitere eigenständige Komponente des Messgerätes bewegt werden muss. Die Aufnahmemittel betreffen dabei die Vorrichtungen zur Bilderzeugung, die für eine Festlegung des Zielpunktes für einen Messpunkt verwendet werden. Die zur Durchführung der Messung notwendigen Detektoren können auch in weiteren Messgeräten eingebaut sein, so dass beispielsweise durch ein Messgerät mit einer erfindungsgemässen elektronischen Anzeige- und Steuervorrichtung eine Festlegung und Beleuchtung eines Ziels mit Strahlung erfolgt, die Messung wird jedoch von einem oder mehreren weiteren Geräten durchgeführt. In der folgenden exemplarischen Darstellung soll, soweit nicht anders dargestellt, davon ausgegangen werden, dass alle für den Messvorgang notwendigen Komponenten in einem Messgerät integriert sind.

Die Erfindung betrifft dabei im weiteren Sinn alle Messgeräte, die durch direkt vom Menschen zu handhabende Richtmittel auf Messpunkte optisch ausgerichtet werden.

Unter dem Begriff "geodätisches Messgerät" soll in diesem Zusammenhang verallgemeinernd stets ein Messinstrument verstanden werden, das über Vorrichtungen zur Messung oder Überprüfung von Daten mit räumlichem Bezug verfügt. Insbesondere betrifft dies die Messung von Entfernung und/oder Richtung bzw. Winkeln zu einem Bezugs- oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können. Insbesondere sollen hier unter einem solchen geodätischen Messgerät Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung; diese Systeme werden hiermit ebenfalls unter dem Begriff "geodätisches Messgerät" erfasst.

Das Bild eines zu erfassenden Messbereichs und der anzurichtenden Messpunkte wird über eine Optik auf elektronische Aufnahmemittel abgebildet und das Bild über Darstellungsmittel sichtbar gemacht. Die grobe Ausrichtung des Messgerätes oder des Theodoliten kann nun durch Positionieren einer Positionsmarke auf einem Bildschirm erfolgen. Diese Positionsmarke kann durch verschiedene Vorrichtungen, wie sie z.B. auch im Computerbereich zur Steuerung von Bildschirmzeigern üblich sind, bewegt werden. Je nach gewähltem Modus kann durch Verschieben der Positionsmarke eine Nachführung bzw. Ausrichtung des gesamten Messgerätes und/oder die erfindungsgemässe Durchführung eines Messvorgangs zu dem durch die Positionsmarke definierten Punkt bewirkt werden.

Dabei können beispielsweise verschiedene Messpunkte festgelegt werden, die dann nach Abschluss der Eingabe automatisch abgefahren werden oder aber es wird direkt durch die Positionierung der Positionsmarke ein Messvorgang für die jeweils eingestellten, aufzunehmenden Parameter zu dem aktuellen Punkt durchgeführt.

Die Daten und Ergebnisse des Messvorgangs können auf dem Bildschirm dargestellt werden. Diese Darstellung ist dabei in Form einer eingeblendeten Schrift oder auch in eigenen Darstellungsfeldern möglich. Letztere können als getrennte Teile des Bildschirms ausgeführt sein, die beispielsweise vergrösserte Bildausschnitte oder Referenzpunkte abbilden, zu denen eine Ausrichtung erfolgen soll.

Die Verwendung eines berührungssensitiven Flachbildschirmes erlaubt darüber hinaus auch den Verzicht auf spezielle Eingabemittel, so dass die Darstellungs- und Eingabemittel kompakt und modular ausgeführt werden können. Eine weitere Realisierungsmöglichkeit der Darstellung- bzw. Eingabemittel besteht in der Anbindung an auch für andere Anwendungen nutzbare Geräte. Beispielsweise kann über eine Schnittstelle für Kommunikationsnetze oder die Verwendung eines Standardcomputers, insbesondere eines tragbaren Laptops oder Notebooks, auf weitere zusätzliche Funktionalitäten zurückgegriffen werden. Durch eine Verwendung von Rechnern kann zusätzliche, gegebenenfalls universal einsetzbare Software zum Einsatz gebracht werden. Ausserdem können aufgenommenen Messdaten sofort in den verfügbaren Speichern abgelegt und nach Trennung vom geodätischen Messgerät auch in anderen Applikationen verwendet werden. Diese Vorteile können mit einer Internetanbindung kombiniert werden, durch die eine ergänzende Datenübertragung oder Fernsteuerung möglich wird.

Die erfolgte Auftrennung des bisher mit einem direkten Einblick versehenen Teleskops in Aufnahme- und Darstellungsmittel ermöglicht es dem Benutzer, unabhängig von der Ausrichtung der Aufnahmemittel, eine bequeme, ergonomisch günstige Position einzunehmen. Auch kann ein Messgerät in Bereichen plaziert werden, die bisher nicht nutzbar waren, z.B. in Ecken oder engen Durchlässen.

Werden die Darstellungs- und Eingabemittel modular ausgestaltet, können sie baulich vom eigentlichen geodätischen Messgerät getrennt werden. Eine Verbindung zum geodätischen Messgerät, das nun im wesentlichen nur noch aus einem Gehäuse und den Komponenten des Objektivs mit Sensorelementen zusammen mit den zugehörigen Steuerkomponenten besteht, kann über Kommunikationsmittel hergestellt werden, z.B. Draht- oder Funkverbindungen. In diesem Zusammenhang sollen im folgenden unter Drahtverbindungen stets alle flexiblen Kommunikationsverbindungen verstanden werden, die zur Übertragung von Daten dienen, insbesondere jedoch Glasfaser- und Kupferkabel.

Diese Auftrennung erlaubt nun die Steuerung einer Vielzahl von geodätischen Messgeräten als reine Sensoreinheiten mittels einer zentralen Steuer- und Auswerteeinheit. Letztere kann vor der Witterung geschützt z.B. in einem Fahrzeug untergebracht werden. Neben den Vorteilen für Gerät und Bediener erlaubt die Verlastung in einem Fahrzeug auch die Verwendung von weiteren Zusatzkomponenten, die bei einer Anbringung am einzelnen Messgerät dessen Gewicht prohibitiv erhöhen würden. Die Verwendung mehrerer Sensoreinheiten erlaubt vereinfachte, gleichzeitige Messungen zu gemeinsamen oder verschiedenen Punkten, eine Ausrichtung der geodätischen Messgeräte untereinander oder auch einen überschlagenden Einsatz, bei dem stets nur ein Teil der Sensoreinheiten für Messungen verwendet wird, während der andere Teil an andere Standorte verbracht wird. Die Darstellung der Messbereiche von gleichzeitig genutzten Sensoreinheiten kann nacheinander auf dem gleichen Bildschirm erfolgen oder aber auch zeitgleich auf einem Bildschirm in eigenen Darstellungsbereichen, z.B. in Fenster- oder Split-Screen-Technik.

Durch die elektronische Darstellung ist eine Ableitung der horizontalen und vertikalen Winkel zu einem in der Darstellung angezeigten und durch die Positionsmarke ausgewählten Zielpunkt problemlos möglich. Unter Verwendung dieser Koordinaten wird das Strahlungsbündel des Messgerätes bei unveränderter Ausrichtung der Aufnahmemittel auf den Zielpunkt gelenkt. Bei einer Ausführungsform erfolgt die Einkopplung des Strahlenbündels in Emissionsrichtung vor dem Objektiv der Aufnahmemittel, so dass die damit verbundenen optischen Komponenten auch von der zu emittierenden Strahlung genutzt werden. Durch die Nutzung eines gemeinsamen Objektivs kann die Zahl der Gehäuseöffnungen und der Linsen reduziert werden, was zur baulichen Vereinfachung beiträgt.

Die erforderliche Beeinflussung des Strahlenbündels kann grundsätzlich durch eine Bewegung der Strahlungsquelle bei fixem optischen System oder durch die Bewegung oder Veränderung optischer Komponenten bei fixer Strahlungsquelle erfolgen. Darüber hinaus können jedoch auch erfindungsgemäss Strahlungsquelle und optische Komponente zugleich bewegt werden.

Geeignete Mittel zur Bewegung der Strahlungsquelle stehen beispielsweise in Form von Piezoelementen, elektrostatisch verstellbaren Aktuatoren oder miniaturisierten Motoren zur Verfügung. Die Beeinflussung des Strahlungsbündels durch Bewegung oder Veränderung der optischen Komponenten kann auf vielerlei Weise erfolgen. Zum einen sind grundsätzlich die gleichen Elemente nutzbar, wie sie auch zur Bewegung der Strahlungsquelle Verwendung finden können. Zum anderen können auch die optischen Eigenschaften des vom Strahlungsbündel betroffenen Bereichs einer optischen Komponente verändert werden. Eine Möglichkeiten hierfür besteht in der Änderung des Winkels einer reflektierenden Oberfläche, die durch Kippen und Drehen eines Spiegels, Verdrehens eines rotierbaren Doppelkeils oder Deformierens einer Oberfläche bewirkt werden kann. Deformierbare Spiegeloberflächen als sogenannte Continuous Membrane Deformable Mirrors (CMDM) sind beispielsweise aus der Patentschrift US 6,384,952 bekannt.

Die erfindungsgemässe elektronische Anzeige- und Steuervorrichtung, ein erfindungsgemässes Messgerät und ein geodätisches Vermessungssystem werden nachfolgend anhand von in der Zeichnung schematisch dargestellten Ausführungsbeispielen rein beispielhaft näher beschrieben. Im einzelnen zeigen
- Fig.1: die Darstellung der Komponenten einer erfindungsgemässen elektronischen Anzeige- und Steuervorrichtung;
- Fig.2: eine erste Realisierungsform der erfindungsgemässen Ausrichtmittel, bei der die Strahlungsquelle bewegbar gestaltet ist;
- Fig.3: eine zweite Realisierungsform der erfindungsgemässen Ausrichtmittel, bei der die Emissionsrichtung des Strahlungsbündels durch einen beweglichen Spiegel beeinflussbar ist;
- Fig.4: eine dritte Realisierungsform der erfindungsgemässen Ausrichtmittel, bei der die Emissionsrichtung des Strahlungsbündels durch einen Doppelkeil beeinflussbar ist;
- Fig.5: eine vierte Realisierungsform der erfindungsgemässen Ausrichtmittel, bei der die Strahlungsquelle bewegbar gestaltet und über eine Kalibrierkontrollvorrichtung überprüfbar ist;
- Fig.6: eine Darstellung eines erfindungsgemässen geodätischen Messgeräts mit Trennung von Sensor- und Verarbeitungseinheit;
- Fig.7: die Darstellung des erfindungsgemässen Zusammenwirkens von Positionsmarke und Strahlungsbündel in der Darstellung eines Flachbildschirms;
- Fig.8: die Darstellung des erfindungsgemässen Zusammenwirkens von Positionsmarke und Strahlungsbündel bei der Vermessung zweier Ziele mit einem Theodoliten;
- Fig.9: die Darstellung der Verwendung eines erfindungsgemässen geodätischen Vermessungssystems mit mehreren geodätischen Messgeräten zur überschlagenden Vermessung;
- Fig.10: die Darstellung einer ersten Ausführungsform der Integration von Sender und Empfänger auf ein Trägerelement;
- Fig.11: die Darstellung einer Ausführungsform mit einer fixen Position von Sender und Empfänger;
- Fig.12: die Darstellung einer zweiten Ausführungsform der Integration von Sender und Empfänger auf ein Trägerelement und
- Fig.13: die Darstellung einer dritten Ausführungsform der Integration von Sender und Empfänger auf ein Trägerelement mit einer zusätzlichen internen optischen Abbildung des Strahlungsbündels auf die Aufnahmevorrichtung.

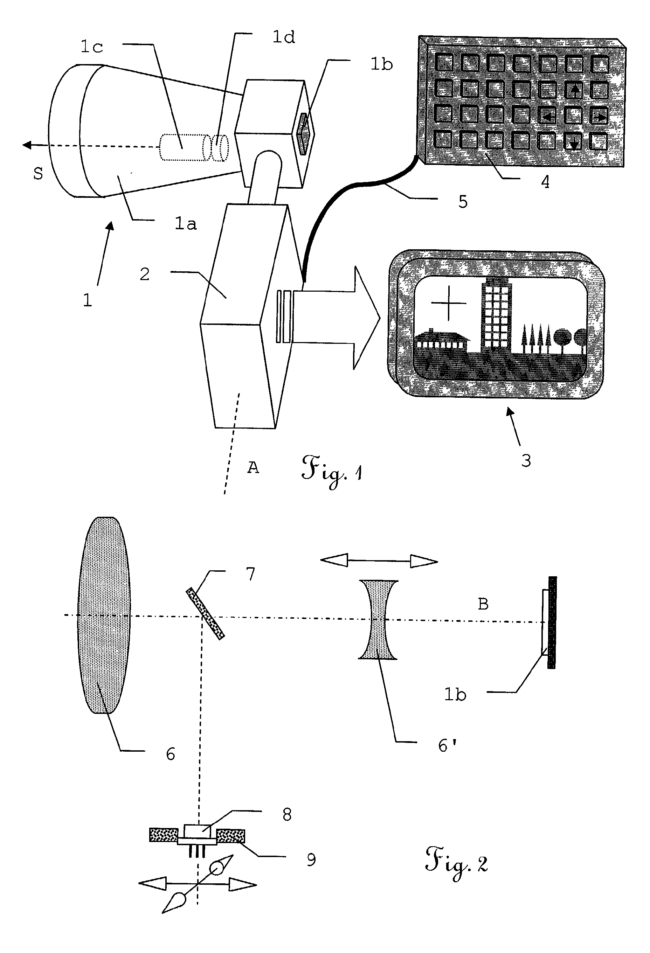

Fig.1 zeigt die figürliche Darstellung der Komponenten einer erfindungsgemässen elektronischen Anzeige- und Steuervorrichtung, wie sie beispielhaft zur Ausrichtung von verschiedenen Typen von Messgeräten und zur Aufnahme von Messdaten verwendet werden können. Dabei bilden Objektivteil 1a zusammen mit einer elektronischen Aufnahmevorrichtung 1b die für den Messvorgang notwendigen Aufnahmemittel 1. Der direkte Einblick für das menschliche Auge wird durch geeignete Mittel zur Bildaufnahme, z.B. eine Video- oder CCD-Kamera, ersetzt. Diese elektronischen Mittel erlauben neben konstruktiver Vorteile auch eine selektive oder erweiterte Ausnutzung von Spektralbereichen, die dem menschlichen Auge nicht direkt zugänglich sind. In der hier exemplarisch gezeigten Ausführungsform sind in die Aufnahmemittel 1 zusätzlich eine Strahlungsquelle 1c und Ausrichtmittel 1d integriert, so dass Teile der Aufnahmemittel 1 sowohl für die Strahlgänge von Aufnahmevorrichtung 1b wie auch der Strahlungsquelle 1c genutzt werden können.

Die dargestellten Aufnahmemittel 1 können darüber hinaus weitere Instrumente mit einem, zumindest teilweise, identischen Strahlgang oder in koaxialer Anordnung aufweisen. Aufgrund des Wegfalls eines direkten Einblicks ergeben sich konstruktive Vorteile durch den verringerten Platzbedarf, eine nicht mehr notwendige optische Bildumkehrung, wie auch durch die nun entfallenden Restriktionen hinsichtlich des menschlichen Auges, z.B. durch das Erfordernis des Augenschutzes bei Laserstrahlung.

Die Aufnahmemittel 1 sind direkt mit einer gegenüber diesen um eine horizontale Achse A schwenkbaren Darstellungseinheit 2 verbunden, die geeignete Darstellungsmittel aufnimmt. Ein Ausschnitt des von den Aufnahmemitteln 1 erfassten Messbereichs wird auf einem in der Darstellungseinheit 2 integrierten Bildschirm 3 als Darstellungsmittel dargestellt, dessen Bild hier aus Gründen der besseren Sichtbarkeit separat und gedreht abgebildet wird. Die Eingabe von Daten zur Steuerung der Aufnahmemittel 1 mit der Darstellungseinheit 2 und des Messvorgangs erfolgt beispielhaft über eine Tastatur 4 als Eingabemittel. Alternativ oder ergänzend können jedoch auch andere Eingabe- oder Kontrollmittel, z.B. ein Joy-Stick, Trackball oder andere bewegungssensitive Vorrichtungen, verwendet werden. Die Tastatur 4 ist über ein Kabel 5 mit der Darstellungseinheit 2 verbunden. Eine andere Möglichkeit der Verbindung bietet jedoch auch die drahtlose Kommunikation, z.B. durch Verwendung von Infrarot- oder Funk-Fernbedienungen. Über die Tastatur 4 werden die Daten bzgl. des Messvorgangs und für dessen Steuerung eingegeben. Beispielsweise können für die Messungen laufende Nummern, die aktuelle Projektbezeichnung oder die Kennung des Nutzers als Hintergrunddaten des Messvorgangs eingegeben werden. Zur Auswertung der durch den Messvorgang erfassten Daten kann ein elektronischer Rechner mit Speichervorrichtungen verwendet werden, die beispielsweise baulich in das Gehäuse der Tastatur 4 integriert sind.

Über die Tastatur 4 kann darüber hinaus auch der Messvorgang direkt gesteuert werden, indem die notwendigen Kommandos, beispielsweise durch Positionierung eines Cursors, eingeben werden. Durch geeignete Eingabe- oder Steuerungsmittel werden die Aufnahmemittel 1 dann grob so ausgerichtet und eingestellt, dass beabsichtigte Messvorgänge durchgeführt werden können. Zur Steuerung können allgemein bekannte Mittel wie z.B. Servomotoren oder andere Aktuatoren verwendet werden. Liegen Zielpunkte innerhalb des Erfassungsbereichs der Aufnahmemittel 1, so kann erfindungsgemäss auf eine Bewegung der Aufnahmemittel 1 verzichtet werden. Die Zielpunkte werden nun vermessen, indem bei unveränderter Ausrichtung der Aufnahmemittel 1 das von der Strahlungsquelle 1c ausgesandte Strahlungsbündel S durch die Ausrichtmittel 1d so beeinflusst wird, dass es den Zielpunkt erfasst und eine Messung ermöglicht wird.

Verschiedene für Verwendungen in einem Theodoliten oder einem anderen geodätischen Messgerät geeignete Ausführungsformen der Erfindung sind in den Fig.2-5 nicht abschliessend dargestellt.

Fig.2 zeigt schematisch eine erste Realisierungsform der erfindungsgemässen Ausrichtmittel, bei der die Strahlungsquelle bewegbar gestaltet ist. Die Aufnahmemittel beinhalten als wesentliche Komponenten eine Aufnahmevorrichtung 1b, auf die ein Messbereich über eine Objektivlinse 6 und ein Fokussierelement 6' abgebildet wird. Die Objektivlinse 6 beschreibt hier ein geeignetes Objektiv, das auch aus mehreren optischen Komponenten zusammengesetzt sein kann. Gleichermassen wird das Fokussierelement 6' hier rein exemplarisch als hinter der Objektivlinse 6 befindlich dargestellt. Gleichermassen kann ein solches Element aber auch an anderer Stelle im Strahlgang angeordnet sein, insbesondere im Objektiv. Das Fokussierelement 6' kann dabei beispielsweise als Autofokussystem oder als scharfstellendes Nachfokussierelement ausgebildet sein bzw. gesteuert und bewegt werden. Im Strahlgang dieser Aufnahmemittel, der hier durch die optische Achse B definiert wird, befindet sich ein Umlenkspiegelelement 7. Über dieses Umlenkspiegelelement 7 und die nachfolgende Objektivlinse 6 wird die von einer Laserdiode 8 als Strahlungsquelle emittierte Strahlung in Form eines Strahlungsbündels ausgesandt. Bei einer fixen Positionierung von Objektivlinse 6 kann nun die Emissionsrichtung der Strahlung durch eine Verschiebung der Laserdiode 8, vorzugsweise in einer Ebene, gesteuert werden. Eine solche Verschiebung kann durch geeignete miniaturisierte Aktuatoren oder Stellelemente, wie z.B. piezoelektrische Elemente, als Ausrichtmittel 9 bewirkt werden. Die Ausrichtung des Strahlungsbündels auf einen Zielpunkt kann nun durch ein Verschieben der Laserdiode 8 bei unveränderter Ausrichtung der optischen Achse B erfolgen. Alternativ oder ergänzend zur Verschiebung in einer Ebene kann die Laserdiode 8 auch gekippt werden, so dass der Winkel zum Umlenkspiegelelement 7 zur Ausrichtung des Strahlungsbündels variiert wird. Damit verwenden die zu emittierende Strahlung und die Aufnahmevorrichtung 1b die Objektivlinse 6 als gemeinsame optische Komponente.

Eine zweite Realisierungsform der erfindungsgemässen Ausrichtmittel, bei welcher die Emissionsrichtung des Strahlungsbündels durch einen beweglichen Spiegel als ausrichtmittel 9' beeinflussbar ist, wird in Fig.3 gezeigt. Die Aufnahmemittel weisen wiederum eine Objektivlinse 6, ein Fokussierelement 6' und eine Aufnahmevorrichtung 1b auf. In dieser Ausführungsform ist jedoch die Laserdiode 8 fixiert, wohingegen das Spiegelelement als Ausrichtmittel 9' rotier- und kippbar ausgelegt ist. Durch die Bewegung des Spiegelelementes kann nun die Ausrichtung des emittierten Strahlungsbündels zur optischen Achse B beeinflusst und gesteuert werden. Geeignete mikropositionierbare Spiegelelemente stehen beispielsweise in Form von elektrostatisch in zwei Achsen neigbaren Spiegeln zur Verfügung. Statt eines dreh- und/oder kippbaren Spiegels können auch deformierbare optische Elemente, wie z.B. deformierbare Spiegeloberflächen als sogenannte Continuous Membrane Deformable Mirrors (CMDM), an gleicher Stelle angebracht werden.

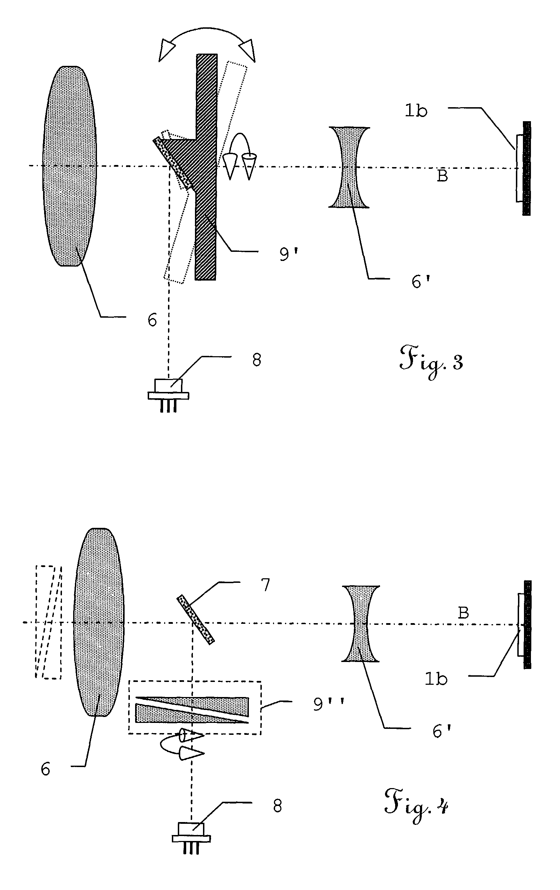

Fig.4 beschreibt eine dritte Realisierungsform der erfindungsgemässen Ausrichtmittel, bei der die Emissionsrichtung des Strahlungsbündels durch einen Doppelkeil beeinflussbar ist. Wiederum weisen die Aufnahmemittel eine Objektivlinse 6, ein Fokussierelement 6' und eine Aufnahmevorrichtung 1b auf. Das Umlenkspiegelelement 7 und die Laserdiode 8 sind beide fixiert. Als Ausrichtmittel 9'' dienen nun zwei gegeneinander verdrehbare Keile als optisch wirksamer Doppelkeil. Durch eine Positionierung der beiden Keile gegeneinander wird in an sich bekannter Weise die Strahlung durch Brechung beeinflusst und somit das Strahlungsbündel abgelenkt und auf einen Zielpunkt ausgerichtet. Alternativ zur dargestellten Positionierung zwischen Umlenkspiegelelement 7 und Laserdiode 8 kann der Doppelkeil auch an anderen Orten im Strahlgang angebracht sein. Als ein weiteres Beispiel ist eine mögliche Position vor der Objektivlinse 6 gestrichelt dargestellt.

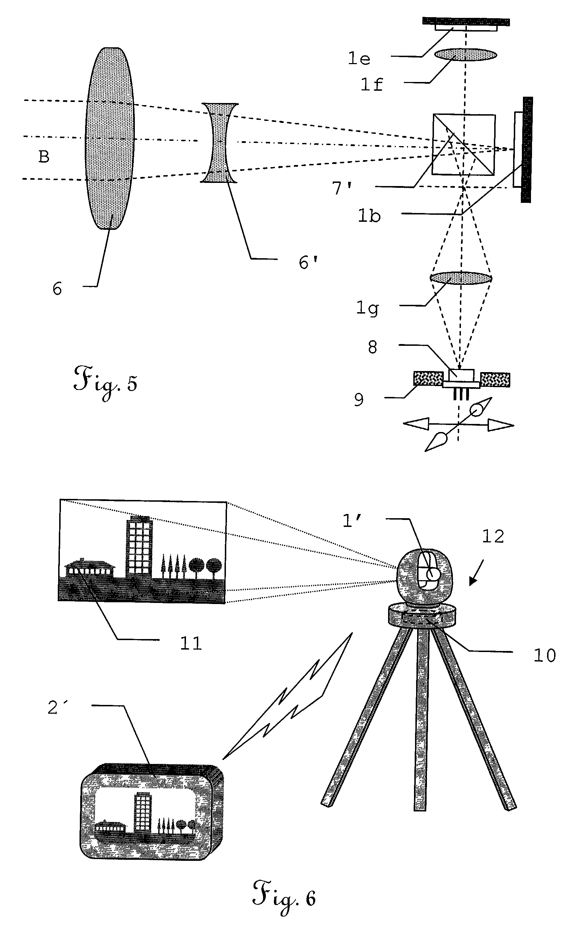

Fig.5 zeigt eine vierte erfindungsgemässe Realisierungsform, bei der die Strahlungsquelle bewegbar gestaltet und hinsichtlich ihrer Nullposition über eine Kalibrierkontrollvorrichtung überprüfbar ist. Die Aufnahmemittel verfügen über eine Objektivlinse 6, ein Fokussierelement 6' und eine Aufnahmevorrichtung 1b, wobei das Fokussierelement 6' direkt nach der Objektivlinse 6 angeordnet ist. Die von der durch Stellelemente als Ausrichtmittel 9 positionierbaren Laserdiode 8 emittierte Strahlung wird über eine Linse 1g und ein als Strahlteiler ausgelegtes Umlenkspiegelelement 7' sowohl über das Fokussierelement 6' und die Objektivlinse 6 emittiert als auch über eine weitere Linse 1f auf einen Bildsensor 1e geführt. Damit stellt diese Ausführungsform eine Abwandlung der in Fig.2 dargestellten Ausführungsform dar. Durch den zusätzlichen Bildsensor 1e kann die Positionierung der Laserdiode 8 unabhängig von der Erfassung durch die Aufnahmevorrichtung 1b kalibriert bzw. hinsichtlich der Kalibrierung überprüft werden.

Fig.6 zeigt eine erfindungsgemässe Ausführungsform eines geodätischen Messgeräts 12 mit einem modular ausgestalteten berührungssensitiven Flachbildschirm 2' als Darstellungseinheit, in die auch elektronische Auswertemittel integriert sind. Das geodätische Messgerät 12 ist mit dem Flachbildschirm 2' über eine drahtlose Kommunikationsverbindung verbunden, so dass beide Komponenten auch in grösser Entfernung voneinander eingesetzt werden können. Dabei werden die Aufnahmemittel 1' bzw. die das Strahlungsbündel beeinflussenden Ausrichtmittel des geodätischen Messgeräts 12 durch die vermittels Flachbildschirm 2' übermittelten Kommandos ferngesteuert. Der erfasste Messbereich 11 wird wiederum auf den Flachbildschirm 2' übertragen und dort dargestellt. Die Aufnahmemittel 1' können durch Richtmittel 10 bewegt werden, so dass der erfasste Messbereich 11 veränderbar ist. Erfasst der Messbereich alle zu vermessenden Zielpunkte, z.B. im Bereich der Bauwerksüberwachung, oder soll aus anderen Gründen auf eine Veränderung des erfassten Messbereichs 11 verzichtet werden, wie z.B. zur Erzielung eines möglichst einfachen Geräteaufbaus, so kann alternativ auch ein erfindungsgemässes Messgerät ohne Richtmittel 10 realisiert werden.

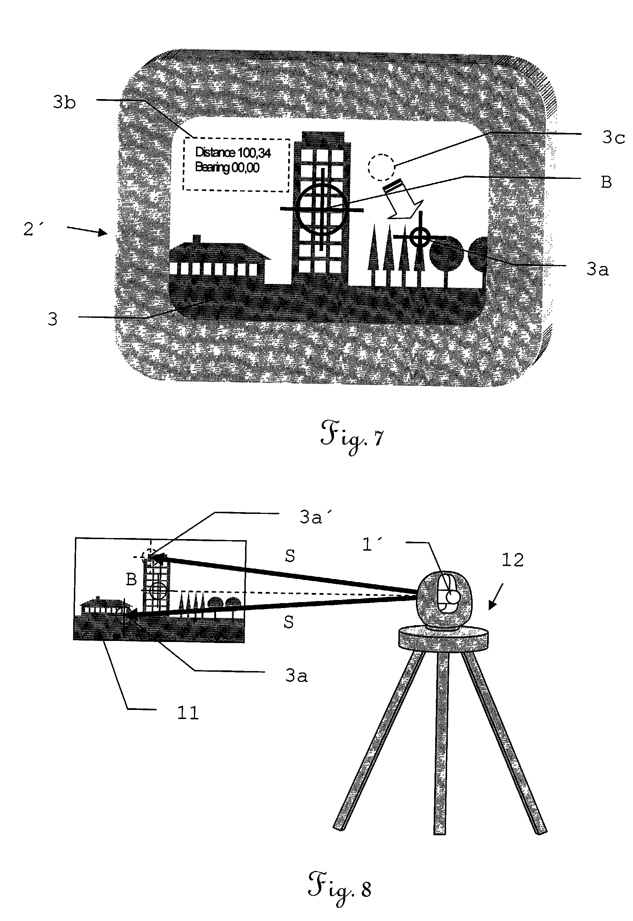

Eine integrierende Ausgestaltungsform stellt die in Fig.7 gezeigte Zusammenfassung verschiedener Komponenten in einem berührungssensitiven Flachbildschirm 2' als Darstellungseinheit dar. Beispielsweise können die Funktionen von Bildschirm 3 und Tastatur in diesem Element zusammengefasst werden. Der Flachbildschirm 2' besitzt einen Bildschirm 3 als Darstellungsmittel, der über Unterteilungen in weitere Darstellungsfelder 3b verfügt. In diesen Darstellungsfeldern 3b können z.B. vergrösserte Ausschnitte des Messbereichs oder auch, wie hier gezeigt, Daten des Messvorgangs dargestellt werden. In der Mitte des Bildschirms 3 ist die optische Achse B der Aufnahmemittel dargestellt. Diese definiert den Mittelpunkt der Darstellung des erfassten Messbereichs.

Der Messvorgang wird über eine bewegbare Positionsmarke 3a gesteuert, die innerhalb des Bildschirms 3 bewegt werden kann. In dieser Ausführungsform des berührungssensitiven Flachbildschirms 2' genügt eine Berührung mit dem Finger oder einem Gegenstand, um die Positionsmarke 3a verschieben zu können. Durch die Ausrichtmittel kann das Strahlungsbündel innerhalb des erfassten Messbereichs so bewegt werden, dass es auf einen durch die Positionsmarke 3a festgelegten Zielpunkt ausgerichtet wird. Dies entspricht in der Darstellung auf dem Bildschirm 3 einer Bewegung der Position 3c des Strahlungsbündels zu der Positionsmarke 3a.

Je nach konkreter Ausgestaltung oder gewähltem Modus kann durch eine Verschiebung der Positionsmarke 3a bereits ein Messvorgang ausgelöst werden. In der gezeigten Szenerie würde somit eine Bewegung der Positionsmarke 3a von der optischen Achse B zur Spitze eines der Bäume als Endposition automatisch eine Messung von Entfernung und Richtung zu diesem so festgelegten Zielpunkt auslösen. Diese Messung erfolgt nun bei fixierter optischer Achse durch eine Bewegung des Strahlungsbündels auf den Zielpunkt und einen damit verbundenen Messvorgang. Ergänzend können beispielsweise noch weitere Daten aufgenommen werden. Z.B. ist es möglich, den Winkel und die absolute Höhendifferenz zwischen optischer Achse B oder einem anderen Bezugspunkt und dem Zielpunkt zu vermessen bzw. zu berechnen und anzugeben. Alternativ kann durch die Bewegung der Positionsmarke 3a auch ein Pfad aus mehreren Zielpunkten festgelegt werden, der nach einem Startkommando selbsttätig abgefahren wird. Dazu wird das Strahlungsbündel durch die Ausrichtmittel sukzessive auf die Zielpunkte ausgerichtet und jeweils ein Messvorgang durchgeführt. Damit fährt in der Darstellung die Position 3c des Strahlungsbündels nacheinander die durch die Positionsmarke 3a ausgewählten Punkte ab. Grundsätzlich können jedoch auch Bewegungen der Aufnahmemittel mit der Bewegung des Strahlungsbündels innerhalb des Messbereichs verbunden werden. Beispielsweise können über eine Tastatur Koordinaten eines zu vermessenden Punktes eingegeben werden. Liegt dieser Zielpunkt ausserhalb des erfassten Messbereichs, so werden die Aufnahmemittel grob auf diesen Zielpunkt ausgerichtet, wobei die optische Achse B nicht auf diesen Punkt weisen muss. Die Vermessung erfolgt dann durch eine nachfolgende und genaue Ausrichtung des Strahlungsbündels auf diesen Zielpunkt, der nun nach erfolgtem Einrichten der Aufnahmemittel innerhalb des Messbereichs liegt.

In Fig.8 wird das erfindungsgemässe Zusammenwirkens von Positionsmarke und Strahlungsbündel bei der Vermessung zweier Ziele mit einem Theodoliten als geodätisches Messgerät 12 dargestellt. Durch die Positionsmarke 3a werden innerhalb des durch die Ausrichtung der optischen Achse auf einen Punkt festgelegten Messbereichs 11 zwei Zielpunkte festgelegt, die durch die aktuelle Position der Positionsmarke 3a und eine frühere Position 3a' definiert werden. Obwohl die optische Achse B der Aufnahmemittel weiterhin auf den ursprünglichen Punkt in der Mitte des Messbereichs 11 ausgerichtet bleibt, erfolgt durch eine Ausrichtung des Strahlungsbündels S jeweils ein Messvorgang zu den ausgewählten Zielpunkten innerhalb des Messbereichs 11.

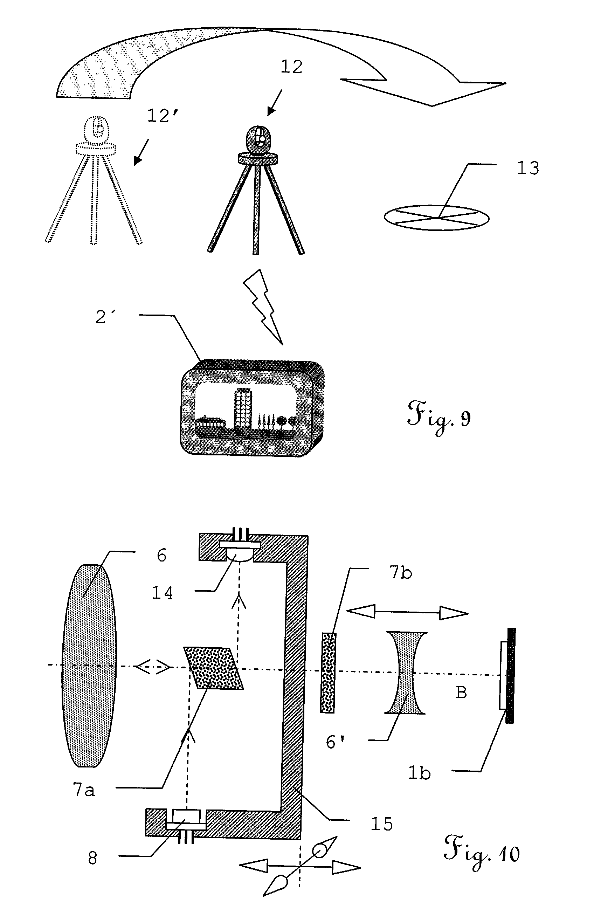

Die Verwendung von mehreren solchermassen gestalteten geodätischen Messgeräten 12, 12' im Rahmen eines erfindungsgemässen geodätischen Vermessungssystems ist in Fig.9 schematisch gezeigt. In einem überschlagenden Verfahren wird eine geodätische Vermessung abwechselnd mit den geodätischen Messgeräten 12 und 12' durchgeführt. Die zur Bedienung der Messgeräte 12 und 12' notwendigen Elemente können in Form von Modulkomponenten ausgelegt werden, in denen Eingabemittel und/oder Darstellungsmittel integriert sind. Ein Beispiel für die Integration von Eingabe- und Darstellungsmitteln in eine gemeinsame Modulkomponente stellt ein berührungssensitiver Flachbildschirm 2' dar. Ergänzend können beispielsweise noch weitere Modulkomponenten verwendet werden, die lediglich über Bildschirme als Darstellungsmittel verfügen und zur Verfolgung und Kontrolle des laufenden Messvorgangs dienen. Während zwischen dem solchen berührungssensitiven Flachbildschirm 2' als modularem Eingabemittel und dem geodätischen Messgerät 12 ein Funkkontakt besteht und eine Messung durchgeführt wird, kann das zweite geodätische Messgerät 12' bzw. auch weitere oder andere Sensoreinheiten an einen neuen Referenzpunkt 13 verbracht werden. Bei diesem erfindungsgemässen System können die geodätischen Messgeräte 12, 12' oder auch andere, ähnlich gestaltete Sensoreinheiten unter Verzicht auf eigene Darstellungs- und Eingabemittel einfach und damit kostengünstig gehalten werden. Zur Bedienung der Eingabemittel wird nur noch eine Person benötigt, die abgesetzt und vor Witterungseinflüssen geschützt plaziert werden kann. Aufgrund des überschlagenden Einsatzes, der hinsichtlich der einfachen Verbringung der Sensoreinheiten keine speziellen Ausbildungsanforderungen an das Personal stellt, und der über ein integriertes Lot möglichen, ferngesteuerten Feinpositionierung können Vermessungen schneller und damit kostengünstiger als bisher durchgeführt werden.

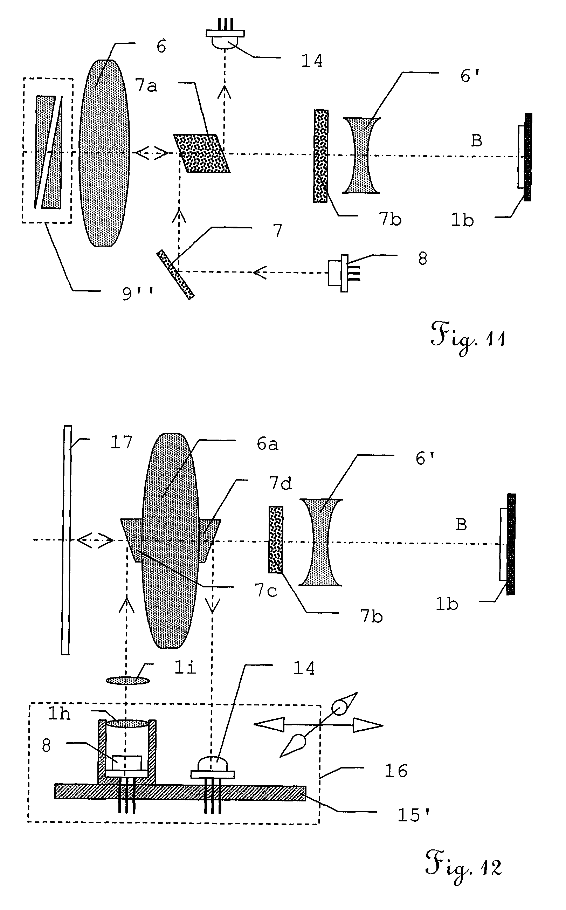

Durch die gegenüber der optischen Achse veränderbare Ausrichtung des Strahlungsbündels entsteht das Erfordernis, auch die Ausrichtung der Empfangsvorrichtung nachzuführen bzw. anzupassen. Grundsätzlich können dabei Emission und Empfang des Strahlungsbündels bei der erfindungsgemässen Vorrichtung unabhängig voneinander ausgestaltet werden. Beispielsweise kann die Empfangsvorrichtung durch eine Schaltung oder einen Rechner elektronisch so gesteuert und bewegt werden, dass sie den durch die Ausrichtung der Strahlungsbündels resultierenden Empfangsbedingungen Rechnung trägt. Allerdings ist es aus Gründen der technischen Komplexität sowie der Geräteauslegung hinsichtlich Grösse, Gewicht und Energieverbrauch sinnvoll, entweder Strahlungsquelle und Empfangsvorrichtung fix zu positionieren und die Ausrichtungen von ausgesandtem und empfangenem Strahlungsbündel gemeinsam zu manipulieren oder aber Strahlungsquelle und Empfangsvorrichtung auf einem gemeinsamen Trägerelement anzubringen und dieses Trägerelement zu bewegen. Verschiedene Beispiele für Ausführungsformen dieser beiden Alternativen sind in den Figuren 10 bis 13 dargestellt.

Fig.10 stellt eine erste Ausführungsform der Integration einer Laserdiode 8 als Strahlungsquelle und einer Empfangsvorrichtung 14 auf einem gemeinsamen Trägerelement 15 dar. Die bewegbare Laserdiode 8 emittiert Strahlung auf eine erste geneigte Fläche eines doppelseitigen Umlenkspiegelelementes 7a, von dem diese Strahlung über eine Objektivlinse 6 als Strahlungsbündel ausgesandt wird. Die nach einer Reflektion des Strahlungsbündels wieder über die Objektivlinse 6 empfangene Strahlung wird von einem rückreflektierenden Spiegelelement 7b auf die zweite Fläche des Umlenkspiegelelementes 7a und von dort zur Empfangsvorrichtung 14, die beispielsweise aus einer Photodiode bestehen kann, geführt. Sowohl Laserdiode 8 als auch Empfangsvorrichtung 14 werden durch ein gemeinsames Trägerelement 15 als Ausrichtmittel gehalten und können vermittels diesem gleichartig bewegt werden, wobei Laserdiode 8 und Empfangsvorrichtung 14 mit ihrer Emissions- bzw. Empfangsrichtung in diesem Beispiel gegeneinander orientiert angeordnet sind. Durch die gleichartige Bewegung erfolgte eine aufeinander abgestimmte Positionierung von Strahlungsquelle und Empfangsvorrichtung 14, wodurch keine zweite Steuereinrichtung mit den dazugehörige Aktuatoren benötigt wird. Die Fokussierung erfolgt in dieser Ausführungsform über ein verstellbares Fokussierelement 6', das hinter der Objektivlinse 6 im Strahlgang angeordnet ist.

In Fig.11 erfolgt die Darstellung einer alternativen Ausführungsform mit einer fixen Positionierung von Laserdiode 8 und Empfangsvorrichtung 14. Die fix positionierte Laserdiode 8 emittiert Strahlung über ein Umlenkspiegelelement 7 auf eine erste geneigte Fläche eines doppelseitigen Umlenkspiegelelementes 7a, von dem diese Strahlung über eine Objektivlinse 6 mit nachgelagertem gegeneinander verdrehbaren Keilen als Ausrichtmittel 9'' ausgesandt wird. Diese Ausführungsform ähnelt damit der in Fig.4 beschriebenen Version. Die nach einer Reflektion wieder über die Objektivlinse 6 empfangene Strahlung wird von einem rückreflektierenden Spiegelelement 7b auf die zweite Fläche des Umlenkspiegelelementes 7a und von dort zur fix positionierten Empfangsvorrichtung 14 geführt.

Die Fig.12 zeigt die Darstellung einer zweiten Ausführungsform der Integration von Strahlungsquelle und Empfangsvorrichtung 14 auf einem Trägerelement 15 als integrierte Sende- und Empfangseinheit 16. In dieser Ausführungsform wird die von der mittels Trägerelement 15' beweglich positionierbaren Laserdiode 8 emittierte Strahlung über ein vor der Objektivlinse 6a angebrachtes Umlenkspiegelelement 7c durch ein Deckelement 17 als Strahlungsbündel ausgesandt. Dabei wird die Strahlung innerhalb der Sende- und Empfangseinheit 16 durch eine Linse 1h auf eine gegenüber dem Umlenkspiegelelement 7c fest positionierte Linse 1i geführt. Durch diesen Strahlgang wird eine von der Positionierung der Sende- und Empfangseinheit 16 abhängige Emission des Strahlungsbündels unter einem Winkel zur optischen Achse B bewirkt. Die nach einer Reflektion über die Objektivlinse 6' empfangene Strahlung wird von einem rückreflektierenden Spiegelelement 7b auf das Umlenkspiegelelementes 7d und von dort zur in der Sende- und Empfangseinheit 16 integrierten Empfangsvorrichtung 14 geführt. Da das Strahlungsbündel nicht durch die Objektivlinse 6' emittiert wird, wird beim Empfang der Strahlung, der durch die Objektivlinse 6' erfolgt, eine Bildumkehr gegenüber der Emissionsrichtung bewirkt. Dadurch kann eine geeignete Positionierung von Laserdiode 8 und Empfangsvorrichtung 14 durch ein gleichgerichtetes Verschieben vermittels der Sende- und Empfangseinheit 16 erreicht werden.

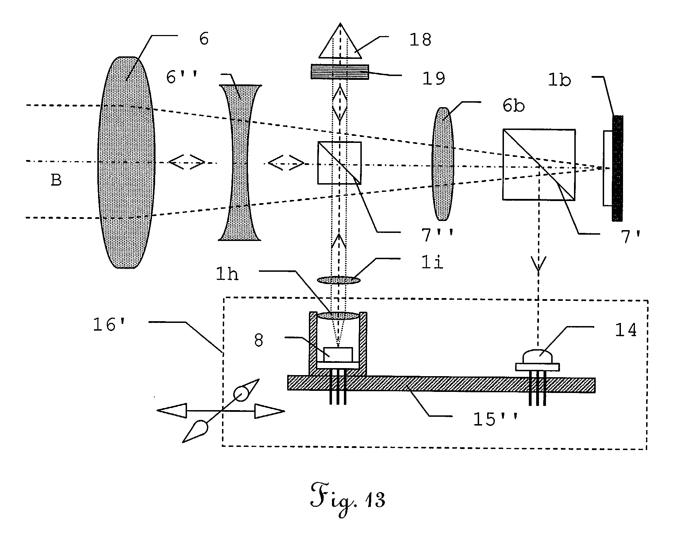

Die Darstellung einer dritten Ausführungsform der Integration von Strahlungsquelle und Empfangsvorrichtung 14 auf ein Trägerelement 15 wird in Fig.13 gezeigt. Hierbei entfällt durch eine interne optische Abbildung des Strahlungsbündels auf die Aufnahmevorrichtung 1b die Notwendigkeit, die Position des Strahlungsbündels innerhalb des Erfassungsbereichs durch einen künstlich erzeugten Punkt anzuzeigen. Die von der Laserdiode 8 über die Linsen 1h und 1i erzeugte Strahlung wird über ein als Strahlteiler ausgebildetes Umlenkspiegelelement 7'' in einen ersten und einen zweiten Teilstrahl aufgeteilt und der erste Teilstrahl durch eine Objektivlinse 6 als Strahlungsbündel emittiert. Der zweite Teilstrahl wird über einen Retroreflektor 18, dem ein Shutter 19 zur Vermeidung eines Übersprechens zugeordnet sein kann, wiederum auf das Umlenkspiegelelement 7'' geführt und von dort durch eine Linse 6b auf ein zweites als Strahlteiler ausgebildetes Umlenkspiegelelement 7' geführt, wo ein dritter und vierter Teilstrahl erzeugt werden. Dieses Umlenkspiegelelement 7' lässt den dritten Teilstrahl der von der Laserdiode 8 erzeugten Strahlung auf die Aufnahmevorrichtung 1b fallen, so dass der Aufpunkt dieser Strahlung der Position des Strahlungsbündels innerhalb des Erfassungsbereichs entspricht. Der vierte Teilstrahl wird auf die Empfangsvorrichtung 14 gelenkt. Durch eine geeignete Positionierung der Sende- und Empfangseinheit 16' können die auf einem Trägerelement 15'' montierte Laserdiode 8 und Empfangsvorrichtung 14 gleichgerichtet verschoben und damit ausgerichtet werden.

Es versteht sich, dass die dargestellten Figuren eine von vielen Ausführungsformen darstellen und der Fachmann alternative Realisierungsformen, z.B. unter Verwendung anderer optischer Komponenten bzw. Sensoreinheiten, abweichender Strahlgänge oder anderer Ausrichtmittel, Bedien- und Eingabeelemente ableiten kann. Insbesondere kann die Verstellung von Strahlungsquelle und Empfangsvorrichtung auch durch andere, hier nicht explizit dargestellte Verschiebungsverfahren, z.B. durch eine Rotation oder Neigungen in mehreren Achsen, erfolgen. Gleichermassen kann die erfindungsgemässe Vorrichtung auf ähnliche Messeinrichtungen mit abweichendem Funktionalitätsumfang, wie z.B. Totalstationen oder reine Entfernungsmesser, bzw. auf Messeinrichtungen mit ähnlicher, aber spezialisierter Funktionalität, wie z.B. Komponenten militärischer Richtkreise oder industrieller Überwachungsanlagen, übertragen werden.

## Patentansprüche

1. Elektronische Anzeige- und Steuervorrichtung für ein geodätisches Messgerät (12,12'), das eine Strahlungsquelle (8) zur Emission eines sichtbaren oder unsichtbaren Strahlungsbündels (S) zur Durchführung eines Messvorganges aufweist,
mit elektronischen Darstellungsmitteln (3) zur visuellen Darstellung eines durch Aufnahmemittel (1,1') erfassten Messbereichs (9),
mit Eingabemitteln (4) zur Eingabe von Daten und zur Steuerung der Aufnahmemittel (1,1') und des Messvorgangs,
wobei durch die Darstellungsmittel (3) wenigstens eine Positionsmarke (3a), vorzugsweise ein Fadenkreuz, bereitgestellt wird, und
wobei durch eine Positionierung der Positionsmarke (3a) die Festlegung eines Messpunkts zur räumlichen Vermessung bestimmt wird,
**dadurch gekennzeichnet, dass**
Ausrichtmittel (9,9',9'') vorhanden sind, welche eine veränderbare Ausrichtung der Emissionsrichtung des Strahlungsbündels (S) gegenüber der Orientierung der Aufnahmemittel (1,1') bewirken, wobei Ausrichtmittel (9,9',9'') und Aufnahmemittel (1,1') so ausgelegt und angeordnet sind, dass das Strahlungsbündel (S) zumindest teilweise wenigstens einer optischen Komponente (6) der Aufnahmemittel (1,1') zugeordnet wird, insbesondere vermittels dieser Komponente (6) emittiert wird.

2. Elektronische Anzeige- und Steuervorrichtung nach Anspruch 1,
**dadurch gekennzeichnet, dass**
die Ausrichtmittel (9,9',9'') so ausgelegt sind, dass die Ausrichtung des Strahlungsbündels (S) so bewirkt wird, dass in der Darstellung des erfassten Messbereichs (11) die Position (3c) des Strahlungsbündels mit der Positionsmarke (3a) zur Deckung gebracht wird, so dass eine Nutzung des Strahlungsbündels (S) zur Durchführung des Messvorgangs erfolgt.

3. Elektronische Anzeige- und Steuervorrichtung nach Anspruch 1 oder 2,
**dadurch gekennzeichnet, dass**
die Ausrichtmittel (9,9',9'') wenigstens eines der folgenden Mittel aufweisen
- Stellelemente (9) zur zweidimensionalen Verschiebung der Strahlungsquelle,
- eine rotier- und/oder kippbare reflektierende Fläche (9'),
- eine, vorzugsweise kontinuierlich, deformierbare reflektierende Fläche,
- einen gegeneinander verdrehbaren transmittiven Doppelkeil (9'').

4. Elektronische Anzeige- und Steuervorrichtung nach einem der vorangehenden Ansprüche,
**dadurch gekennzeichnet, dass**
eine Kalibrierkontrollvorrichtung vorhanden ist, die einen Bildsensor (1e) aufweist, der die Emissionsrichtung des Strahlenbündels (S) detektiert, so dass eine von den Aufnahmemitteln (1,1') unabhängige Erfassung der Emissionsrichtung des Strahlungsbündels (S) erfolgt.

5. Elektronische Anzeige- und Steuervorrichtung nach einem der vorangehenden Ansprüche,
**dadurch gekennzeichnet, dass**
die Darstellungsmittel (3) so ausgelegt sind, dass eine Darstellung des Strahlungsbündels (S) im Messbereich (11) durch wenigstens einen unterscheidbar dargestellten Bildpunkt erfolgt, der entweder
- durch eine Berechnung der Position des Strahlungsbündels (S) im Messbereich (11) und eine elektronische Hervorhebung des dieser Position zugeordneten Bildpunktes oder
- durch eine direkte optische Abbildung der Strahlung innerhalb der Aufnahmemittel (1,1') erfolgt.

6. Elektronische Anzeige- und Steuervorrichtung nach einem der vorangehenden Ansprüche,
**dadurch gekennzeichnet, dass**
die Positionsmarke (3a) durch die Eingabemittel (4) innerhalb der visuellen Darstellung (3), vorzugsweise in diskreten Schritten, insbesondere bildpunktweise, positionierbar ist.

7. Elektronische Anzeige- und Steuervorrichtung nach einem der vorangehenden Ansprüche,
**dadurch gekennzeichnet, dass**
die Eingabemittel (4) und/oder Darstellungsmittel (3) so ausgelegt sind, dass durch die Positionierung der Positionsmarke (3a) wenigstens ein Teil des Messvorgangs ausgelöst wird, insbesondere
• die Steuerung der Aufnahmemittel (1,1') und/oder
• die Steuerung der Ausrichtmittel (9,9',9'') bewirkt wird.

8. Elektronische Anzeige- und Steuervorrichtung nach einem der vorangehenden Ansprüche,
**dadurch gekennzeichnet, dass**
die visuelle Darstellung des erfassten Messbereichs (11) oder von Teilen des Messbereichs (11) durch die Aufnahmemittel (1,1') und/oder Darstellungsmittel (3) verkleinerbar, vergrösserbar und/oder in seiner Auflösung veränderbar ist, insbesondere durch eine Variation der, vorzugsweise elektronischen, Zuordnung der Daten von Bildpunkten der Aufnahmemittel (1,1') zu Bildpunkten der Darstellungsmittel (3).

9. Elektronische Anzeige- und Steuervorrichtung nach einem der vorangehenden Ansprüche,
**dadurch gekennzeichnet, dass**
die Aufnahmemittel (1,1') wenigstens eines der folgenden Mittel beinhalten
- CCD-Kamera,
- CMOS-Kamera,
- Video-Kamera,
- Restlichtverstärker,
- Wärmebildkamera,
- Spektral selektiver Detektor,
- Spektraler Filter.

10. Elektronische Anzeige- und Steuervorrichtung nach einem der vorangehenden Ansprüche,
**dadurch gekennzeichnet, dass**
die Aufnahmemittel ein Autofokussystem (6') aufweisen, das Bestandteil des Objektivs oder ausserhalb des Objektivs im Strahlgang positioniert ist.

11. Elektronische Anzeige- und Steuervorrichtung nach einem der vorangehenden Ansprüche,
**dadurch gekennzeichnet, dass**
die Darstellungsmittel (3) wenigstens eines der folgenden Mittel beinhaltet
- LCD-Display,
- Kathodenstrahlröhre,
- Flachbildschirm,
- Schnittstelle zu Kommunikationsnetzen,
- Elektronischer Rechner mit Bildschirm, vorzugsweise tragbarer Laptop.

12. Elektronische Anzeige- und Steuervorrichtung nach einem der vorangehenden Ansprüche,
**dadurch gekennzeichnet, dass**
die Eingabemittel (4) wenigstens eines der folgenden Mittel beinhalten
- berührungssensitiven Bildschirm,
- berührungssensitives Eingabefeld,
- Tastaturfeld,
- Joy-Stick,
- Trackball,
- Computer-Maus,
- Schnittstelle zu Kommunikationsnetzen,
- Elektronischer Rechner mit Eingabevorrichtung, vorzugsweise tragbarer Laptop.

13. Elektronische Anzeige- und Steuervorrichtung nach einem der vorangehenden Ansprüche,
**dadurch gekennzeichnet, dass**
die elektronischen Darstellungsmittel (3) und die Eingabemittel (4) in einer Komponente, vorzugsweise einem berührungssensitiven Flachbildschirm (2'), zusammengefasst sind.

14. Elektronische Anzeige- und Steuervorrichtung nach einem der vorangehenden Ansprüche,
**dadurch gekennzeichnet, dass**
Aufnahmemittel (1,1') und Ausrichtmittel (9,9',9'') als ein eigenständiges Modul ausgebildet sind und mit den anderen Komponenten über eine Drahtverbindung (5) oder eine Funkverbindung verbunden sind.

15. Geodätisches Messgerät (12,12'),
mit einer Strahlungsquelle (8) zur Emission eines sichtbaren oder unsichtbaren Strahlungsbündels (S) zur Durchführung eines Messvorganges,
mit einer Empfangsvorrichtung (14) zur Erfassung von Strahlung des reflektierten Strahlungsbündels (S) und Umwandlung dieser Strahlung in Signale,
mit elektronischen Auswertungsmitteln zur Auswertung der Signale und
mit einer elektronischen Anzeige- und Steuervorrichtung nach einem der Ansprüche 1 bis 14.

16. Geodätisches Messgerät (12,12') nach Anspruch 15, **gekennzeichnet durch**
Richtmittel (10) zum Richten der Aufnahmemittel (1,1') auf einen Messbereich (11).

17. Geodätisches Messgerät (8,8') nach Anspruch 16, **gekennzeichnet durch**
weitere Eingabemittel zur Steuerung der Richtmittel (10).

18. Geodätisches Messgerät (12,12') nach einem der Ansprüche 15 bis 17,
**dadurch gekennzeichnet, dass**
die elektronische Anzeige- und Steuervorrichtung so ausgelegt ist, dass durch eine Positionierung der Positionsmarke (3a) die Bestimmung von wenigstens einem Parameter des Messvorganges, insbesondere
• die Festlegung eines Messpunkts zur räumlichen Vermessung,
• die Steuerung der Aufnahmemittel (1,1'),
• die Steuerung der Ausrichtmittel (9,9',9'') und/oder
• die Steuerung der Richtmittel (10) bewirkt wird.

19. Geodätisches Messgerät (12,12') nach einem der Ansprüche 16 bis 18
**dadurch gekennzeichnet, dass**
die Strahlungsquelle (8) und die Empfangsvorrichtung (14) auf einem bewegbaren Trägerelement (15,15',15'') angeordnet sind.

20. Geodätisches Messgerät (12,12') nach einem der Ansprüche 16 bis 19
**dadurch gekennzeichnet, dass**
Strahlungsquelle (8), Empfangsvorrichtung (14) und Ausrichtmittel (9,9',9'') so ausgebildet und angeordnet sind, dass sowohl von der Strahlungsquelle (8) emittierte Strahlung als auch von der Empfangsvorrichtung (14) zu empfangende Strahlung über die Ausrichtmittel (9,9',9''), insbesondere einen gegeneinander verdrehbaren transmittiven Doppelkeil (9''), geführt werden.

21. Geodätisches Messgerät (12,12') nach einem der Ansprüche 16 bis 20
**dadurch gekennzeichnet, dass**
die Richtmittel eine, insbesondere aufsetzbare, Vorrichtung zum Ausrichten des geodätischen Messgeräts (12,12') bezüglich eines Referenzpunktes, vorzugsweise eines trigonometrischen Punktes, aufweisen, insbesondere in Zusammenhang mit einer Bewegung der Aufnahmemittel (1,1') aus der zur Erfassung des Messbereichs (11) notwendigen Orientierung in eine Orientierung zum Erfassen des Referenzpunktes.

22. Geodätisches Messgerät (12,12') nach einem der Ansprüche 15 bis 21,
**dadurch gekennzeichnet, dass**
die Eingabemittel (4) und/oder die Darstellungsmittel (3) gegenüber einer Ausrichtung des geodätischen Messgeräts (12,12') unabhängig beweglich, insbesondere um eine horizontale Achse (A) schwenkbar, angebracht sind.

23. Modulkomponente für ein geodätisches Vermessungssystem mit integrierten Eingabemitteln und/oder Darstellungsmitteln (3) eines geodätischen Messgeräts (12,12') nach einem der Ansprüche 15 bis 22, wobei diese als eigenständiges Modul ausgebildet und mit dem geodätischen Messgerät (12,12') und gegebenenfalls mit wenigstens einem weiteren geodätischen Messgerät (12,12') über eine Drahtverbindung (5) oder eine Funkverbindung verbunden sind.

24. Geodätisches Vermessungssystem,
mit mindestens zwei geodätischen Messgeräten (12,12') nach einem der Ansprüche 15 bis 22 und
mit mindestens einer Modulkomponente nach Anspruch 23, wobei die wenigstens eine Modulkomponente als gemeinsames Eingabemittel und/oder gemeinsames Darstellungsmittel (3) für die wenigstens zwei geodätischen Messgeräte (12,12'), gegebenenfalls unter deren alternierender Nutzung, ausgebildet ist.
